# EUROPÄISCHE PATENTSCHRIFT

(11) **EP 2 062 676 B1**
(45) Veröffentlichungstag und Bekanntmachung des Hinweises auf die Patenterteilung: **25.01.2012**
(21) Anmeldenummer: 07405334.9
(22) Anmeldetag: 26.11.2007
(51) Int. Cl.: B23K 26/06, B23K 26/14, G02B 7/02, G02B 7/14

(54) **Wechsel-Modul für einen modularen Bearbeitungskopf einer Laserbearbeitungsmaschine ; entsprechende modularen Bearbeitungskopf und Laserbearbeitungsmaschine**
Exchangeable module for a modular processing head of a laser processing machine ; such modular processing head and laser processing machine
Module échangeable pour une tête d'usinage laser modulable ; une telle tête d'usinage laser modulable et une machine d'usinage laser

(43) Veröffentlichungstag der Anmeldung: 27.05.2009
(73) Patentinhaber: Bystronic Laser AG, CH-3362 Niederönz (CH)
(72) Erfinder: Belletti, Marco, 3377 Walliswil bei Wangen (CH)
(74) Vertreter: Patentbüro Paul Rosenich AG

(56) Entgegenhaltungen:
- EP-A- 1 743 726
- DE-C1- 10 056 330
- DE-C2- 19 655 127
- DE-U1-202004 013 136
- JP-A- 2005 193 249
- US-A- 5 702 622
- US-A- 6 124 565
- US-A1- 2007 000 888

## Beschreibung

Die Erfindung bezieht sich auf ein Wechsel-Modul für einen Bearbeitungskopf einer Laserbearbeitungsmaschine gemäß dem Oberbegriff des Anspruchs 1 siehe, z.B., US 2007/000888).

Ein Bearbeitungskopf einer Laserbearbeitungsmaschine stellt das letzte Element einer Strahlführung eines Laserstrahls dar, der zur Bearbeitung eines Werkstücks mittels der Laserbearbeitungsmaschine verwendet wird. Ein Bearbeitungskopf hat in der Regel die Aufgabe, den Laserstrahl auf das zu bearbeitende Werkstück bzw. die zu bearbeitenden Werkstücke zu fokussieren und gegebenenfalls zusätzlich ein Prozessgas oder mehrere verschiedene Prozessgase in die Umgebung des Fokuspunkts des jeweiligen Laserstrahls zu lenken, um die vom Laserstrahl induzierten Bearbeitungsprozesse (beispielsweise Schneiden eines Werkstücks, Verschweissen mehrerer Werkstücke, Herstellung von Gravuren auf Oberflächen, o. ä.) mithilfe des jeweiligen Prozessgases zu beeinflussen. Ein Bearbeitungskopf umfasst deshalb in der Regel zumindest eine Fokussierungsoptik und einen Verstellmechanismus, welcher dazu dient, die Fokussierungsoptik zu verstellen, um den Abstand der Fokussierungsoptik relativ zu dem zu bearbeitenden Werkstück verändern und somit die Lage des Fokuspunkts relativ zum Werkstück beeinflussen zu können. Weiterhin umfasst ein Bearbeitungskopf in Regel eine Reihe von Sensoren zur Erfassung verschiedener Betriebsparameter (beispielsweise zur Kontrolle der Position des Bearbeitungskopfes, zur Überwachung der Qualität des jeweiligen Ergebnisses einer Bearbeitung mit dem Laserstrahl, zur Überwachung der Integrität der Fokussierungsoptik, o. ä.), eine Elektronik zur Verarbeitung der jeweiligen Sensorsignale und zur Kommunikation mit einer Steuerung der Laserbearbeitungsmaschine und eine Zuführung verschiedener Medien (beispielsweise zur Versorgung mit Energie und/oder mit Kühlmitteln und/oder mit den für die Durchführung von Bearbeitungsprozessen benötigten Gase).

Die Fokussierungsoptik eines Bearbeitungskopfes einer Laserbearbeitungsmaschine muss in der Regel relativ häufig ausgewechselt werden. Dafür gibt es verschiedene Gründe. Einerseits können die optischen Elemente einer Fokussierungsoptik jeweils Verschleissteile sein, die einer Einwirkung des zu fokussierenden Laserstrahls bei einer hohen Lichtintensität des Laserstrahls nur für eine begrenzte Zeitdauer standhalten und deshalb nach Erreichen einer bestimmten Lebensdauer ausgetauscht werden müssen. Weiterhin sind Laserbearbeitungsmaschinen meist so ausgelegt, dass verschiedene Bearbeitungsprozesse durchgeführt werden können, die jeweils verschiedene Fokussierungsoptiken benötigen, beispielsweise Fokussierungsoptiken mit verschiedenen Brennweiten und/oder verschiedenen Durchmessern.

Um ein einfaches Austauschen der jeweiligen Fokussierungsoptik zu ermöglichen, weisen Laserbearbeitungsmaschinen häufig einen modular aufgebauten Bearbeitungskopf auf, der aus einem stationären Teil und einem auswechselbaren, zumindest eine Fokussierungsoptik umfassenden Wechsel-Modul zusammengesetzt ist. Unter dem Begriff "stationärer Teil" des Bearbeitungskopfes werden hier alle Komponenten des Bearbeitungskopfes mit Ausnahme des Wechsel-Moduls verstanden, d. h. alle Komponenten des Bearbeitungskopfes, von denen das jeweilige Wechsel-Modul (beim Entfernen des jeweiligen Wechsel-Moduls vom "stationären Teil") getrennt werden kann, ohne dass der "stationäre Teil" in Einzelteile zerlegt werden muss.

Ein konventioneller, diesem Konzept entsprechender modularer Bearbeitungskopf ist aus DE 196 28 857 A1 bekannt. In diesem Beispiel besteht eine Fokussierungsoptik aus einer Linse oder mehreren Linsen. Die jeweiligen Linsen sind jeweils in eine Kassette eingebaut, wobei die Position der jeweiligen Linsen relativ zur Kassette mit Hilfe von Positionierringen in Längsrichtung der optischen Achse der Fokussierungsoptik voreingestellt werden kann. Eine derartig ausgebildete Kassette bildet ein Wechsel-Modul des Bearbeitungskopfs. Ein derartiges Wechsel-Modul kann in einen stationären Teil des Bearbeitungskopfes über einen im stationären Teil ausgebildeten kanalartigen Raum senkrecht zur Ausbreitungsrichtung des Laserstrahls in eine Trägereinheit für das Wechsel-Modul einschieben bzw. herausziehen, wobei die Kassette des Wechsel-Moduls in der Trägereinheit ausschliesslich senkrecht zur Ausbreitungsrichtung des Laserstrahls geführt ist, um eine Verstellung des Wechsel-Moduls in axialer Richtung (d. h. in Ausbreitungsrichtung des Laserstrahls) relativ zur Trägereinheit zu verhindern. Die Trägereinheit ist im Wesentlichen hohlzylinderförmig ausgebildet und an einer Seite in einem ringförmigen Kanal geführt, welcher koaxial zur Ausbreitungsrichtung des Laserstrahls liegt und sich in einem Gehäuseteil des Bearbeitungskopfes befindet. Die Trägereinheit für das jeweilige Wechsel-Modul ist im vorliegenden Fall somit ein Bestandteil des stationären Teils des Bearbeitungskopfes. Der stationäre Teil des Bearbeitungskopfes umfasst weiterhin eine Antriebseinrichtung zur Verschiebung der Trägereinheit in der Ausbreitungsrichtung des Laserstrahls. Die Antriebseinrichtung ist im Innern des (stationären Teils des) Bearbeitungskopfes fest montiert und umfasst einen elektrisch angetriebenen Getriebemotor, ein an der Motorwelle des Motors befestigtes Antriebsrad, einen mit diesem Antriebrad angetriebenen Zahnriemen und eine mit dem Zahnriemen angetriebene Spindel, welche mit der Trägereinheit für das Wechsel-Modul verbunden ist und für eine Verstellung der Trägereinheit in der Längsrichtung des Laserstrahls sorgt, falls die Spindel mit dem Getriebemotor angetrieben wird. Im vorliegenden Fall sind somit alle angetriebenen Teile der Antriebsvorrichtung im stationären Teil des Bearbeitungskopfes fest eingebaut. Es wird auch vorgeschlagen, dass die Antriebsvorrichtung eine pneumatische Antriebsvorrichtung sein kann, wobei allerdings kein Hinweis angegeben ist, wie ein pneumatischer Antrieb konkret ausgeführt werden könnte bzw. in den Bearbeitungskopf integriert werden könnte. Im stationären Teil des Bearbeitungskopfes ist weiterhin zwischen der Fokussierungsoptik und einer Austrittsöffnung für den Laserstrahl ein Druckraum angeordnet, in den ein unter Druck stehendes Prozessgas einleitbar ist und aus dem das jeweils eingeleitete Prozessgas in Form eines Gasstroms über die genannte Austrittsöffnung für den Laserstrahl entweichen kann. Um die Kräfte zu kompensieren, die von dem in den Druckraum eingeleiteten Prozessgas auf die Fokussierungsoptik übertragen werden, ist die Trägereinheit für das Wechsel-Modul derart angeordnet, dass sie an dem von der Austrittsöffnung für den Laserstrahl wegweisenden Ende in eine Druckkammer hineinragt, wobei in dieser Druckkammer ein solcher Arbeitsdruck herrscht, dass die Trägereinheit im Gleichgewicht gehalten wird. Um auf einfache Weise einen Druckausgleich zwischen Druckraum und Druckkammer zu erzielen, sind der Druckraum und die Druckkammer über wenigstens einen Verbindungskanal miteinander verbunden, sodass die Druckkammer ebenfalls mit dem in den Druckraum eingespeisten Prozessgas gefüllt wird.

Ein modularer Bearbeitungskopf der vorstehend genannten Art hat verschiedene Nachteile. Beispielsweise ist nicht nur die Fokussierungsoptik als Verschleissteil zu betrachten. Die Antriebseinrichtung zum Verstellen der Fokussierungsoptik und insbesondere die angetriebenen Teile der Antriebseinrichtung müssen häufig gewartet werden und haben eine verhältnismässig kurze Lebensdauer. Da die gesamte Antriebseinrichtung fest im stationären Teil des Bearbeitungskopfes eingebaut ist, muss zum Warten der Antriebseinrichtung oder zum Austausch von Verschleissteilen der Antriebseinrichtung jeweils die Laserbearbeitungsmaschine ausser Betrieb gesetzt werden, was zu einer Verminderung der Produktivität der Laserbearbeitungsmaschine führt. Weiterhin hängen die Anforderungen, die an eine Antriebseinrichtung zum Verstellen einer Fokussierungsoptik zu richten sind, wesentlich von den Eigenschaften der jeweiligen Fokussierungsoptik ab. Beispielsweise müssen bei der Auslegung der Antriebseinrichtung die Abmessungen, das Gewicht oder die Schärfentiefe der Fokussierungsoptik berücksichtigt werden, um zu ermöglichen, dass die Fokussierungsoptik hinreichend schnell und präzise relativ zu dem zu bearbeitenden Werkstück positioniert werden kann. Eine Antriebseinrichtung, die fest im stationären Teil eines Bearbeitungskopfes eingebaut sein soll, muss deshalb so ausgelegt sein, dass sie möglichst zusammen mit einer Vielzahl verschiedener Fokussierungsoptiken betrieben werden kann. Dies ist mit dem Nachteil verbunden, dass eine fest eingebaute Antriebseinrichtung die Auswahl der Fokussierungsoptiken einschränkt, die zusammen mit der Antriebsvorrichtung verwendet werden können. Weiterhin würde in der Regel eine Fokussierungsoptik zusammen mit einer Antriebseinrichtung betrieben, welche die durch die Fokussierungsoptik gegebenen Mindestanforderungen übererfüllt. Die Antriebseinrichtung wird deshalb in der Regel - gemessen an diesen Mindestanforderungen - leistungsfähiger als nötig ausgebildet sein.

Der vorliegenden Erfindung liegt die Aufgabe zugrunde, die genannten Nachteile zu vermeiden und einen modularen Bearbeitungskopf einer Laserbearbeitungsmaschine vorzuschlagen, welcher wartungsfreundlich ausgebildet ist und jeweils mit einer Antriebseinrichtung ausgestattet werden kann, die hinsichtlich der jeweiligen Fokussierungsoptik optimiert ist.

Diese Aufgabe wird gemäss der Erfindung gelöst durch einen modularen Bearbeitungskopf mit den Merkmalen des Patentanspruchs 1, eine Kombination aus einem modularen Bearbeitungskopf und einem Wechsel-Modul mit den Merkmalen des Patentanspruchs 2 und eine Laserbearbeitungsmaschine mit den Merkmalen des Patentanspruchs 19.

Zur Realisierung des erfindungsgemässen Wechsel-Moduls mit fluidischer Antriebseinheit ist vorgesehen, die Tragstruktur des Wechsel-Moduls als Hohlkörper auszubilden und ein angetriebenes Teil der Antriebseinheit als Kolbeneinheit auszubilden, wobei die Kolbeneinheit in einem Hohlraum des Hohlkörpers angeordnet ist und an einer Hohlraumwand des Hohlraums geführt ist. Die Kolbeneinheit kann so angeordnet sein, dass sie koaxial zur Ausbreitungsrichtung des Laserstrahls bewegbar ist.

Die Kolbeneinheit ist in einen Durchgangskanal für den Laserstrahl aufweisen, wobei die Fokussierungsoptik im Durchgangskanal angeordnet und an der Kolbeneinheit befestigt ist.

Dabei ist vorgesehen, dass die Antriebseinheit eine erste Druckkammer und eine zweite Druckkammer umfasst und die Kolbeneinheit eine erste Kolbenfläche und eine zweite Kolbenfläche aufweist, wobei die erste Druckkammer von einem ersten Wandabschnitt der Hohlraumwand und der ersten Kolbenfläche begrenzt ist und die zweite Druckkammer von einem zweiten Wandabschnitt der Hohlraumwand und der zweiten Kolbenfläche begrenzt ist, und wobei die jeweiligen Druckkammern derart ausgebildet sind, dass bei einer Bewegung der Kolbeneinheit entlang der Hohlraumwand das Volumen der ersten Druckkammer und das Volumen der zweiten Druckkammer gegensinnig vergrössert bzw. verkleinert werden. Um eine Bewegung der Kolbeneinheit zu ermöglichen, ist die erste Druckkammer mit einem ersten Fluid und die zweite Druckkammer mit einem zweiten Fluid beflutbar. Durch ein gezielte Beflutung der ersten Druckkammer bzw. der zweiten Druckkammer mit dem ersten bzw. dem zweiten Fluid kann die Kolbeneinheit entlang der Hohlraumwand bewegt werden, und zwar entweder in Richtung der ersten Druckkammer oder in Richtung der zweiten Druckkammer.

Die erste Druckkammer und/oder die zweite Druckkammer können konzentrisch zur Ausbreitungsrichtung des Laserstrahls ausgebildet sein. Dementsprechend könnten die erste Kolbenfläche und/oder die zweite Kolbenfläche die Form eines bezüglich der Ausbreitungsrichtung des Laserstrahls konzentrischen Ringes aufweisen. Diese Gestaltung der jeweiligen Druckkammern und Kolbenflächen ermöglicht die Realisierung einer besonders kompakten Antriebseinrichtung. Diese Antriebseinrichtung kann mit einfachen Mitteln und somit kostengünstig realisiert werden.

Die erfindungsgemässe Kombination umfasst einen Bearbeitungskopf und ein auswechselbares Wechsel-Modul, wobei das jeweilige Wechsel-Modul eine Fokussierungsoptik zur Fokussierung des Laserstrahls umfasst und wobei eine Antriebseinrichtung zum Bewegen und/oder Verstellen der Fokussierungsoptik vorhanden ist. Es ist vorausgesetzt, dass die Antriebseinrichtung mindestens ein angetriebenes Teil umfasst, wobei die jeweiligen angetriebenen Teile relativ zu einem stationären Teil des Bearbeitungskopfes bewegbar sind und die Fokussierungsoptik an mindestens ein angetriebenes Teil der Antriebseinrichtung derart gekoppelt ist, dass die Position der Fokussierungsoptik relativ zum stationären Teil des Bearbeitungskopfes veränderbar ist.

Gemäss der Erfindung umfasst das Wechsel-Modul die Fokussierungsoptik, die jeweiligen angetriebenen Teile der Antriebseinrichtung und eine Tragstruktur für die Fokussierungsoptik und die jeweiligen angetriebenen Teile der Antriebseinrichtung, wobei die Tragstruktur in eine stationäre Betriebsposition bezüglich des stationären Teils des Bearbeitungskopfes bringbar ist und die Fokussierungsoptik und die jeweiligen angetriebenen Teile der Antriebseinrichtung derart an der Tragstruktur angeordnet sind, dass die Fokussierungsoptik mittels der Antriebseinrichtung relativ zur Tragstruktur bewegbar ist.

Dadurch, dass auch die jeweiligen angetriebenen Teile der Antriebseinrichtung für die Fokussierungsoptik in das Wechsel-Modul integriert sind, sind sowohl die jeweilige Fokussierungsoptik als auch zumindest diejenigen Teile der Antriebseinrichtung, die besonders häufig gewartet werden müssen oder schnell verschleissen, in einem Wechsel-Modul zusammengefasst und leicht zugänglich, sobald das Wechsel-Modul von dem stationären Teil des Bearbeitungskopfes getrennt ist. Alle Komponenten des Wechsel-Moduls, insbesondere die Fokussierungsoptik und die angetriebenen Teile der Antriebseinrichtung, können nach Entfernen des Bearbeitungskopfes bequem gewartet, repariert oder ausgetauscht werden. Nach Entfernen eines Wechsel-Moduls kann der modulare Bearbeitungskopf sofort mit einem anderen geeigneten Wechsel-Modul ausgestattet werden. Durch Bereitstellen einer Mehrzahl geeigneter Wechsel-Moduln können deshalb mit der Fokussierungsoptik im Zusammenhang stehende Unterbrechungen des Betriebes der Laserbearbeitungsmaschine weitgehend vermieden werden.

Um ein einfaches Auswechseln eines Wechsel-Moduls zu ermöglichen, kann das jeweilige Wechsel-Modul beispielsweise als Einschub ausgebildet werden, welcher beispielsweise radial oder parallel zur Ausbreitungsrichtung des Laserstrahls, in den stationären Teil des Bearbeitungskopfes geschoben und entsprechend entfernt werden kann.

Dadurch, dass auch die jeweiligen angetriebenen Teile der Antriebseinrichtung für die Fokussierungsoptik in das Wechsel-Modul integriert sind, ist es weiterhin möglich, das jeweilige Wechsel-Modul mit Komponenten einer Antriebseinrichtung auszustatten, die im Hinblick auf die Erfordernisse der jeweiligen Fokussierungsoptik optimiert ist. Verschiedene Fokussierungsoptiken können so jeweils mit verschiedenen Antriebseinrichtungen oder mit verschiedenen Komponenten einer Antriebseinrichtung kombiniert werden.

In ein Wechsel-Modul können beispielsweise jeweils eine Antriebseinrichtung oder die angetriebenen Teile einer Antriebseinrichtung integriert werden, wobei die Antriebseinrichtung abhängig von Eigenschaften der jeweilige Fokussierungsoptik ausgelegt werden kann. Die angetriebenen Teile der jeweiligen Antriebseinrichtung können beispielsweise abhängig von den Abmessungen, dem Gewicht oder der Schärfentiefe der jeweiligen Fokussierungsoptik jeweils unterschiedlich dimensioniert werden.

Um zu einem platzsparenden Wechsel-Modul zu gelangen, ist es beispielsweise möglich, die angetriebenen Teile der Antriebsvorrichtung um die jeweilige Fokussierungsoptik herum verteilt anzuordnen, beispielsweise in einem Raumbereich, der sich konzentrisch um die Ausbreitungsrichtung des Laserstrahls bzw. um die Fokussierungsoptik erstreckt. Auf der Grundlage dieses Konzepts können ein besonders kompaktes Wechsel-Modul und dementsprechend ein besonders kompakter Bearbeitungskopf realisiert werden. Trotz der kompakten Anordnung der angetriebenen Teile der Antriebseinrichtung ist in diesem Fall ein bequemes Austauschen der Fokussierungsoptik eines Wechsel-Moduls möglich, zumal bei einer Trennung des Wechsel-Moduls vom stationären Teil des Bearbeitungskopfes jeweils sowohl die Fokussierungsoptik als auch die angetriebenen Teile der Fokussierungsoptik von dem stationären Teil des Bearbeitungskopfes getrennt werden, wobei die angetriebenen Teile so um die Fokussierungsoptik herum angeordnet sein können, dass die Fokussierungsoptik zumindest nach dem Entfernen des Wechsel-Moduls vom stationären Teil des Bearbeitungskopfes zumindest von einer Seite des Wechsel-Moduls her leicht zugänglich ist.

Eine bevorzugte Ausführungsform des modularen Bearbeitungskopfes umfasst eine Antriebseinheit, die als fluidischer Antrieb ausgebildet ist. In diesem Fall ist mindestens eines der jeweiligen angetriebenen Teile der Antriebseinheit mit einem unter einem Druck stehenden Fluid (beispielsweise mit einem Gas oder einer Hydraulikflüssigkeit) antreibbar und somit bewegbar. Ein fluidisch angetriebenes Teil kann einfach in ein Wechsel-Modul integriert werden und einfach mit einer Fokussierungsoptik kombiniert werden. Das angetriebene Teil kann beispielsweise eine fluidisch antreibbare Kolbenfläche sein. Diese kann konzentrisch um die optische Achse einer Fokussierungsoptik angeordnet sein und beispielsweise die Form eines bezüglich der Ausbreitungsrichtung des Laserstrahls konzentrischen Ringes aufweisen.

Auf dieser Basis kann ein Wechsel-Modul realisiert werden, das mehrere Vorteile aufweist. Die Antriebseinheit kann beispielsweise mit wenigen Bauteilen realisiert werden, kompakt ausgebildet werden, ein geringes Gewicht aufweisen und kostengünstig herstellt werden. Der fluidische Antrieb ermöglicht ausserdem eine schnelle Verstellung der Fokussierungsoptik (beispielsweise mit einer um einen Faktor 3-5 grösseren Geschwindigkeit im Vergleich zu elektromechanischen Antrieben).

Das erfindungsgemässe Wechselmodul ermöglicht auch die Integration einer Versorgung mit Prozessgasen zur Beeinflussung von Bearbeitungsprozessen. Die Zufuhr der Prozessgase kann so realisiert werden, dass die Prozessgase - obwohl unter einem hohen Druck zugeführt - keine Kräfte bzw. lediglich geringe Kräfte auf die Fokussierungsoptik ausüben. Die Antriebseinrichtung zum Bewegen der Fokussierungsoptik kann deshalb so ausgelegt werden, dass zum Bewegen der Fokussierungsoptik nur geringe Kräfte benötigt werden, selbst wenn Prozessgase unter hohem Druck zugeführt werden.

Das erfindungsgemässe Wechselmodul ermöglicht auch die Integration einer Versorgung mit zusätzlichen Medien, beispielsweise mit Gasen, die zur Reinigung und/oder zur Kühlung der Fokussierungsoptik verwendet werden können. Die Zufuhr solcher Gase kann ebenfalls so realisiert werden, dass diese Gase - selbst wenn sie unter einem Überdruck zugeführt werden - keine Kräfte bzw. lediglich geringe Kräfte auf die Fokussierungsoptik ausüben. Die Antriebseinrichtung zum Bewegen der Fokussierungsoptik kann deshalb so ausgelegt werden, dass zum Bewegen der Fokussierungsoptik nur geringe Kräfte benötigt werden, selbst wenn die genannten Gase unter einem Überdruck zugeführt werden.

Weitere Einzelheiten der Erfindung und insbesondere beispielhafte Ausführungsformen der Erfindung werden im Folgenden anhand der beigefügten Zeichnungen erläutert. Es zeigen:
- Fig. 1: eine Laserbearbeitungsmaschine zur Bearbeitung ei- nes Werkstücks mittels eines Laserstrahls, mit ei- nem erfindungsgemässen modularen Bearbeitungskopf, wobei ein erfindungsgemässes Wechsel-Modul mit ei- ner Fokussierungsoptik in eine stationäre Be- triebsposition bezüglich des stationären Teils des Bearbeitungskopfes gebracht ist;
- Fig. 2: der Bearbeitungskopf gemäss Fig. 1, wobei das Wechsel-Modul aus der stationären Betriebsposition entfernt und von dem stationären Teil des Bearbei- tungskopfes getrennt ist;
- Fig. 3: der Bearbeitungskopf gemäss Fig. 1, in einer 3D- Darstellung, wobei der Bearbeitungskopf in einem Schnitt entlang der Ausbreitungsrichtung des La- serstrahls dargestellt ist;
- Fig. 4: der Bearbeitungskopf gemäss Fig. 1, in einem Schnitt entlang der Ausbreitungsrichtung des La- serstrahls;
- Fig. 5: ein erfindungsgemässes Wechsel-Modul für den Bear- beitungskopf gemäss Fig. 1, wobei das Wechsel- Modul in einem Schnitt entlang der Ausbreitungs- richtung des Laserstrahls dargestellt ist;
- Fig. 6: das Wechsel-Modul gemäss Fig. 4, in einem Schnitt entlang der Ausbreitungsrichtung des Laserstrahls, zusammen mit einem fluidischen Antrieb zum Bewegen einer Fokussierungsoptik.

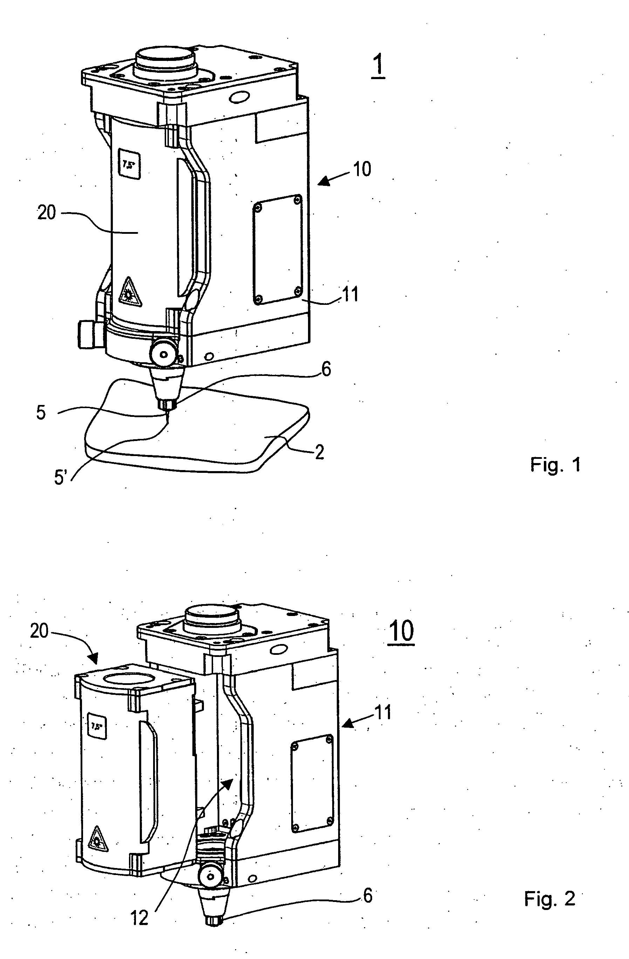

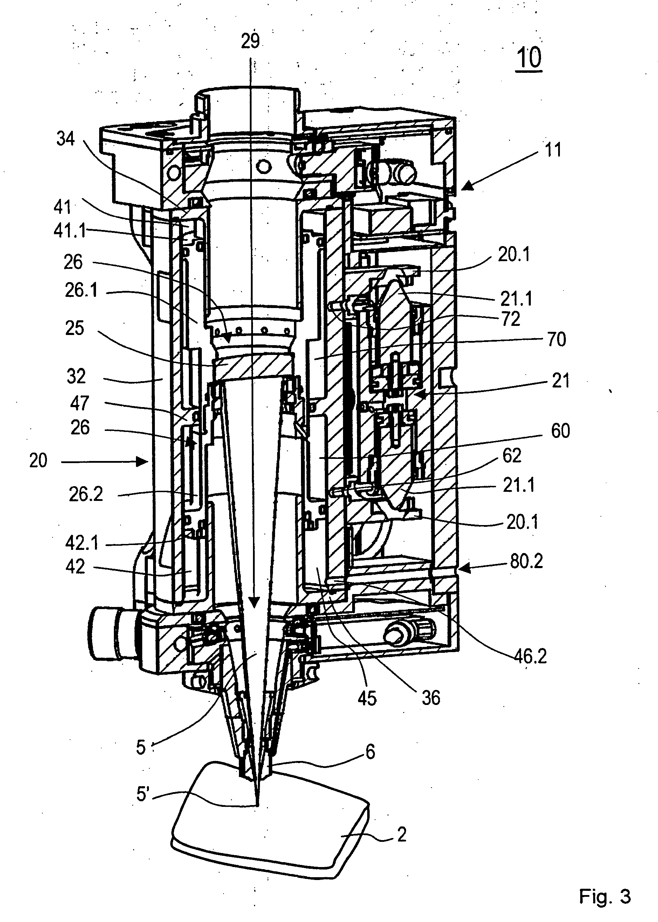

In Fig. 1 zeigt eine Laserbearbeitungsmaschine 1, die mit einem erfindungsgemässen Bearbeitungskopf 10 ausgestattet ist. Die Laserbearbeitungsmaschine 1 ist im vorliegenden Beispiel im Betrieb bei einer Bearbeitung eines Werkstücks 2 mittels eines Laserstrahls 5 dargestellt, wobei der Laserstrahl 5 aus einer (in Fig. 2 und 3 erkennbaren) Austrittsöffnung einer Düse 6 austritt. Der Laserstrahl 5 ist im vorliegenden Fall mittels einer Fokussierungsoptik, die im Zusammenhang mit den Fig. 3-5 noch erläutert wird, auf eine Oberfläche des Werkstücks 2 fokussiert (eine Oberfläche des Werkstücks 2 befindet sich im Fokus 5' der Fokussieroptik).

Die Düse 6 erlaubt es ausserdem, einen Strom eines Prozessgases in der Umgebung des Laserstrahls 5 auf das Werkstück 2 zu lenken, um die Bearbeitung des Werkstücks 2 mit Hilfe des Prozessgases beeinflussen zu können. Die Laserbearbeitungsmaschine 1 ist in Fig. 1 vereinfacht dargestellt: Der Bearbeitungskopf 10 ist relativ zum Werkstück 2 bewegbar, beispielsweise mithilfe eines in Fig. 1 nicht dargestellten Roboterarms.

Wie Fig. 1 und 2 zeigen, umfasst der Bearbeitungskopf 10 einen stationären Teil 11 in der Form eines an einer Seite offenen Gehäuses, welches einen Raum 12 für ein Wechsel-Modul 20 umschliesst. Das Wechsel-Modul 20 ist in den Raum 12 senkrecht zur Ausbreitungsrichtung 5.1 des Laserstrahls 5 einschiebbar und entsprechend herausziehbar. In der Darstellung gemäss Fig. 1 befindet sich das Wechsel-Modul 20 in einer stationären Betriebsposition bezüglich des stationären Teils 11 des Bearbeitungskopfes 10. Fig. 2 zeigt, dass das Wechsel-Modul 20 als Ganzes vom stationären Teil 11 des Bearbeitungskopfes 10 getrennt werden kann, ohne dass der stationäre Teil in Einzelteile zerlegt werden muss.

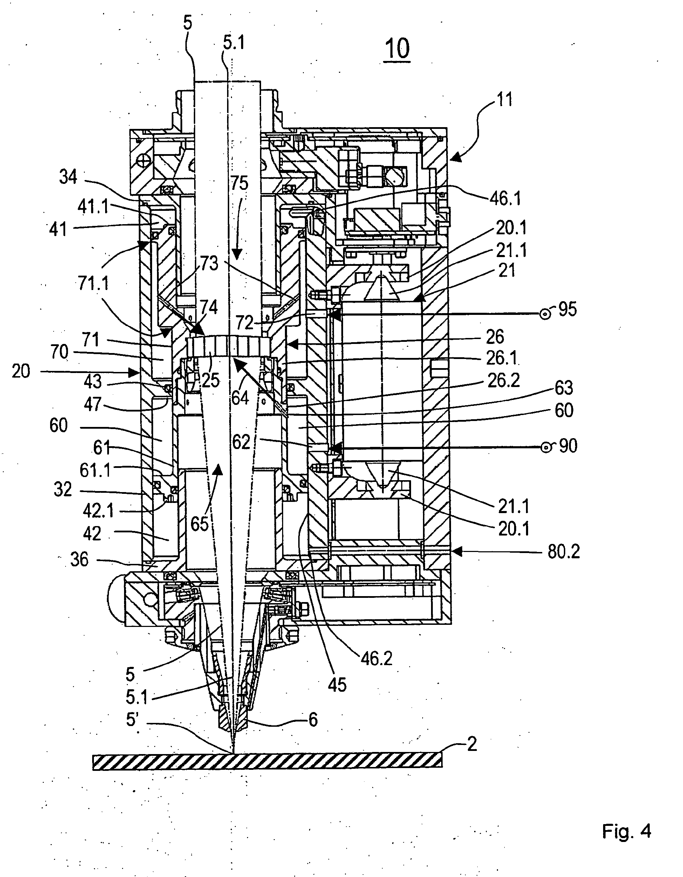

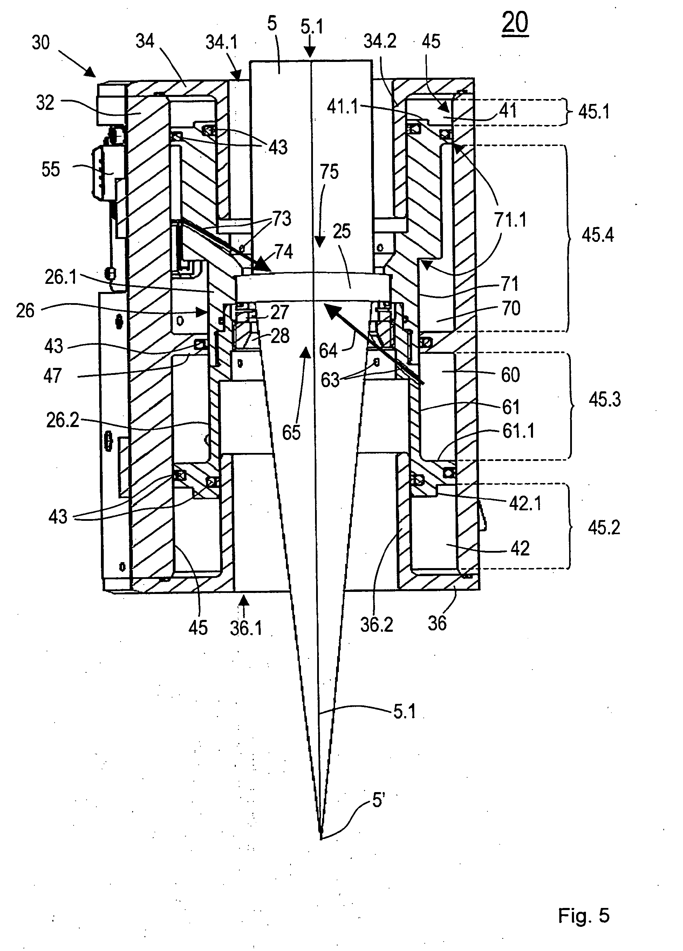

Die Fig. 3 und 4 zeigen bauliche Einzelheiten des stationären Teils 11 des Bearbeitungskopfes 10 und des Wechselmoduls 20, wobei das Wechsel-Modul 20 in einer stationären Betriebsposition bezüglich des stationären Teils 11 dargestellt ist. Fig. 5 zeigt das vom stationären Teil 11 getrennte Wechsel-Modul 20 separat, wobei weitere (in den Fig. 3 und 4 nicht erkennbare) Einzelheiten des Wechsel-Moduls 20 sichtbar gemacht sind.

Um das jeweilige Wechsel-Modul 20 präzise in die stationäre Betriebsposition bringen und in der stationären Betriebsposition halten zu können, ist der stationäre Teil 11 des Bearbeitungskopfes 10 mit einer Zentrier- und Haltvorrichtung 21 für das Wechsel-Modul 20 versehen. Die Haltevorrichtung 21 umfasst zwei jeweils an einem Ende konisch ausgebildete Zentrierstifte 21.1, die mithilfe einer (nicht dargestellten) Steuerung derart bewegbar sind, dass sie jeweils mit ihrem konischen Ende in entsprechende Zentrierbohrungen eingreifen können, welche in den beiden Armen 20.1, die an einer äusseren Seite des Wechsel-Moduls 20 befestigt sind, ausgebildet sind (Fig. 3). Durch Hineinbewegen der Zentrierstifte 21.1 in die genannten Zentrierbohrungen in den Armen 20.1 kann das Wechsel-Modul 20 zentriert, in die stationäre Betriebsposition gebracht und in der stationären Betriebsposition gehalten werden. Entsprechend können die beiden Zentrierstifte 21.1 aus den Zentrierbohrungen in den Armen 20.1 herausbewegt werden, um die Arme 20.1 freizugeben und ein Entfernen des Wechsel-Moduls 20 aus dem Raum 12 zu ermöglichen.

Wie die Fig. 3-5 zeigen, umfasst das Wechsel-Modul 20 eine Fokussierungsoptik 25, die im vorliegenden Beispiel aus einer Linse besteht. Die Fokussierungsoptik 25 ist so angeordnet, dass die optische Achse der Fokussierungsoptik 25 mit der Ausbreitungsrichtung 5.1 des Laserstrahls 5 zusammenfällt (koaxiale Anordnung), wenn das Wechsel-Modul 20 in die stationäre Betriebsposition gebracht ist.

Um zu erreichen, dass der Laserstrahl 5 auf unterschiedliche Distanzen bezüglich der Düse 6 fokussiert werden kann, ist die Fokussierungsoptik 25 weiterhin so angeordnet, dass ihr Fokus 5' entlang der Ausbreitungsrichtung 5.1 des Laserstrahls bzw. der optischen Achse der Fokussierungsoptik 25 (koaxial) bewegbar ist, wenn das Wechsel-Modul 20 in die stationäre Betriebsposition gebracht ist.

Zu diesem Zweck umfasst das Wechsel-Modul 20 eine Tragstruktur 30 für die Fokussierungsoptik 25, welche eine Bewegung der Fokussierungsoptik 25 koaxial zur Ausbreitungsrichtung 5.1 zulässt, wenn das Wechsel-Modul (und somit auch die Tragstruktur 30) in die stationäre Betriebsposition gebracht ist.

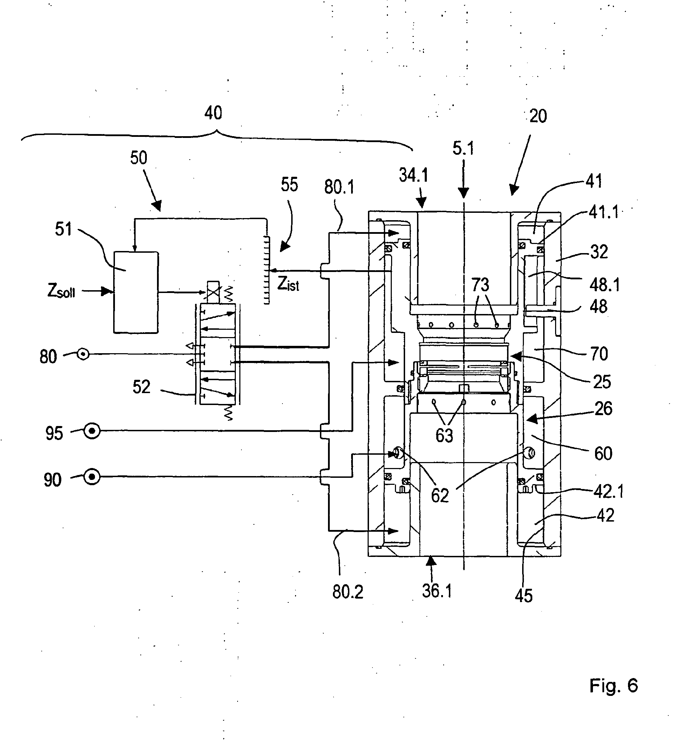

Die Tragstruktur 30 hat mehrere Funktionen: Sie dient als ein Gehäuse des Wechsel-Moduls 20 und zur Führung der Fokussierungsoptik 25 bei einer Bewegung der Fokussierungsoptik 25 entlang der Ausbreitungsrichtung 5' des Laserstrahls 5 und sie bildet weiterhin einen Teil einer fluidisch betätigbaren Antriebseinrichtung 40 (Fig. 6) zum Bewegen der Fokussierungsoptik 25.

Wie die Fig. 5 in Verbindung mit den Fig. 3, 4 und 6 zeigt, ist die Tragstruktur 30 als ein Hohlkörper ausgebildet und umfasst:
eine Seitenwand 32, die einen zylindrischen Hohlraum seitlich begrenzt, wobei die Innenseite der Seitenwand 32 eine Hohlraumwand 45 bildet, die - bezogen auf die Längsrichtung der Seitenwand 32 - einen kreisförmigen Querschnitt aufweist;
eine Verschlussplatte 34, die an einem Ende der Seitenwand 32 befestigt ist und eine kreisförmige Eintrittsöffnung 34.1 für den Laserstrahl 5 aufweist, wobei an die Verschlussplatte 34 ein Rohr 34.2 mit rundem Querschnitt angesetzt ist, welches koaxial zur Hohlraumwand 45 angeordnet ist und die Eintrittsöffnung 34.1 umgibt;
eine Verschlussplatte 36, die an dem anderen Ende der Seitenwand 32 befestigt ist und eine kreisförmige Austrittsöffnung 36.1 für den Laserstrahl 5 aufweist, wobei an die Verschlussplatte 36 ein Rohr 36.2 mit rundem Querschnitt angesetzt ist, welches koaxial zur Hohlraumwand 45 angeordnet ist und die Austrittsöffnung 36.1 umgibt. Die Verschlussplatte 34 begrenzt das Wechsel-Modul 20 auf der Eintrittsseite des Laserstrahls 5 und die Verschlussplatte 36 begrenzt das Wechsel-Modul 20 auf der Austrittsseite des Laserstrahls 5.

Wie die Fig. 3-5 andeuten, sind das Rohr 34.2 und das Rohr 36.2 jeweils derart bezüglich der Hohlraumwand 45 angeordnet, dass zwischen der Hohlraumwand 45 und jedem der Rohre 34.2 und 36.2 jeweils ein ringförmiger Spalt ausgebildet ist. Die Fig. 3-5 zeigen weiterhin, dass die Hohlraumwand 45, die Eintrittsöffnung 34.1, die kreisförmige Austrittsöffnung 36.1 und die Rohre 34.2 und 36.2 jeweils koaxial bzw. konzentrisch bezüglich der Ausbreitungsrichtung 5.1 angeordnet sind, wenn sich das Wechsel-Modul 20 in der stationären Betriebsposition befindet.

Die Fokussierungsoptik 25 ist in eine Linsenfassung 26 eingebaut, welche aus montagetechnischen Gründen aus zwei rohrförmigen Teilstücken 26.1 und 26.2 zusammengesetzt ist und einen Durchgangskanal 29 für den Laserstrahl 5 aufweist (Fig. 3). Die Fokussierungsoptik 25 ist im Durchgangskanal 29 angeordnet und mittels eines Federringes 27 und einer Mutter 28 an der Linsenfassung 26 befestigt, um einen stabilen Sitz der Fokussierungsoptik 25 zu gewährleisten.

Um eine präzis kontrollierbare Bewegung der Fokussierungsoptik 25 relativ zur Tragstruktur 30 des Wechsel-Moduls gewährleisten zu können, ist die Linsenfassung 26 weiterhin derart geformt, dass sie in dem von der Tragstruktur 30 umgebenen Hohlraum angeordnet und geführt werden kann und ausserdem als eine mit einem Fluid betätigbare Kolbeneinheit der Antriebseinrichtung 40 dienen kann. Zu diesem Zweck ist die Linsenfassung 26 wie folgt ausgebildet:
a) Wie die Fig. 3-6 zeigen, ist die Linsenfassung 26 derart dimensioniert, dass - wenn sie in das Wechsel-Modul 20 eingesetzt ist - das Teilstück 26.1 der Linsenfassung 26 in den ringförmigen Spalt ragt, der zwischen der Hohlraumwand 45 und dem Rohr 34.2 ausgebildet ist, und das Teilstück 26.2 der Linsenfassung 26 in den ringförmigen Spalt ragt, der zwischen der Hohlraumwand 45 und dem Rohr 36.2 ausgebildet ist. Dabei ist das der Verschlussplatte 34 zugewandte Ende der Linsenfassung 26 (Teilstück 26.1) so geformt, dass die Aussenseite der Linsenfassung 26 formschlüssig an der Hohlraumwand 45 anliegt und die Innenseite der Linsenfassung 26 formschlüssig an dem Rohr 34.2 anliegt. Entsprechend ist das der Verschlussplatte 36 zugewandte Ende der Linsenfassung 26 (Teilstück 26.2) so geformt, dass die Aussenseite der Linsenfassung 26 an der Hohlraumwand 45 formschlüssig anliegt und die Innenseite der Linsenfassung 26 an dem Rohr 36.2 formschlüssig anliegt. Die Linsenfassung 26 ist folglich an der Hohlraumwand 45 und an den Rohren 34.2 und 36.2 geführt.
b) Die Erstreckung der Linsenfassung 26 in der Längsrichtung der Seitenwand 32 des Wechsel-Moduls 20 ist so gewählt, dass die Linsenfassung 26 um eine vorgegebene Distanz koaxial zur Ausbreitungsrichtung 5.1 des Laserstrahls entlang der Hohlraumwand 45 bewegbar ist. Um eine Drehung der Linsenfassung 26 zu verhindern, kann ein Stift 48 so in die Seitenwand 32 eingesetzt werden, dass der Stift 48 in eine Nut 48.1 eingreift, welche an einer Seite der Linsenfassung 26 parallel zur optischen Achse der Fokussieroptik 25 ausgebildet ist (Fig. 6).
c) Das der Verschlussplatte 34 zugewandte Ende der Linsenfassung 26 (Teilstück 26.1) bildet eine ringförmige Fläche, die mittels Dichtungen 43 gegenüber der Hohlraumwand 45 und dem Rohr 34.2 abgedichtet ist und als eine erste Kolbenfläche 41.1 der Antriebseinheit 40 dient. Entsprechend bildet das der Verschlussplatte 36 zugewandte Ende der Linsenfassung 26 (Teilstück 26.2) eine ringförmige Fläche, die mittels Dichtungen 43 gegenüber der Hohlraumwand 45 und dem Rohr 36.2 abgedichtet ist und als eine zweite Kolbenfläche 42.1 der Antriebseinheit 40 dient. Die beiden Kolbenflächen 41.1 und 42.1 können - wie im Folgenden näher erläutert wird - mit einem unter Druck stehenden Fluid beaufschlagt werden, um die Linsenfassung 26 relativ zur Tragstruktur 30 bewegen zu können. Die Kolbenflächen 41.1 und 42.1 bzw. die Linsenfassung 26 können deshalb als angetriebene Teile der Antriebseinheit 40 betrachtet werden.

Wie die Fig. 3-6 zeigen, umfasst die Antriebseinheit 40 weiterhin eine erste Druckkammer 41 und eine zweite Druckkammer 42. Die erste Druckkammer 41 ist im Bereich eines ersten Wandabschnitts 45.1 der Hohlraumwand 45 innerhalb des ringförmigen Spalts, der zwischen der Hohlraumwand 45 und dem Rohr 34.2 ausgebildet ist, durch die erste Kolbenfläche 41.1 und die Verschlussplatte 34 begrenzt. Entsprechend ist die zweite Druckkammer 42 im Bereich eines zweiten Wandabschnitts 45.2 der Hohlraumwand 45 innerhalb des ringförmigen Spalts, der zwischen der Hohlraumwand 45 und dem Rohr 36.2 ausgebildet ist, durch die zweite Kolbenfläche 42.1 und die Verschlussplatte 36 abgegrenzt. Die Druckkammern 41 sind derart ausgebildet, dass bei einer Bewegung der Linsenfassung 26 entlang der Hohlraumwand 45 das Volumen der ersten Druckkammer 41 und das Volumen der zweiten Druckkammer 42 gegensinnig vergrössert bzw. verkleinert werden (abhängig von der Richtung der Bewegung).

Die erste Druckkammer 41 kann über eine Einlassöffnung 46.1 in der Seitenwand 32 der Tragstruktur 30 mit einem ersten Fluid gefüllt werden. Entsprechend kann die zweite Druckkammer 42 über eine Einlassöffnung 46.2 in der Seitenwand 32 der Tragstruktur 30 mit einem zweiten Fluid gefüllt werden.

Im vorliegenden Fall sorgen Unterschiede zwischen dem jeweiligen Druck des ersten Fluids in der ersten Druckkammer 41 und dem jeweiligen Druck des zweiten Fluids in der zweiten Druckkammer 42 für eine Verschiebung der Linsenfassung 26 entlang der Ausbreitungsrichtung 5.1 des Laserstrahls 5. Dementsprechend kann durch eine Regelung des Drucks des jeweiligen Fluids in der ersten bzw. zweiten Druckkammer 41 bzw. 42 die Position der Fokussierungsoptik 25 bezüglich der Tragstruktur 30 kontrolliert und um vorgegebene Distanzen entlang der Ausbreitungsrichtung 5.1 des Laserstrahls 5 verändert werden.

Wie die Fig. 3-6 andeutet, umfasst die Antriebseinrichtung 40 (als Versorgungseinrichtung für ein erstes Fluid) eine Druckleitung 80.1 für ein erstes Fluid, welche in den stationären Teil 11 des Bearbeitungskopfes 10 führt. Die Einlassöffnung 46.1 ist derart in der Seitenwand 32 des Wechsel-Moduls 20 angeordnet, dass die Druckleitung 80.1 mit der Einlassöffnung 46.1 bzw. der ersten Druckkammer 41 automatisch in Verbindung steht, wenn das Wechsel-Modul 20 in die stationäre Betriebsposition gebracht ist. Entsprechend umfasst die Antriebseinrichtung 40 (als Versorgungseinrichtung für ein zweites Fluid) eine Druckleitung 80.2 für ein zweites Fluid, welche in den stationären Teil 11 des Bearbeitungskopfes 10 führt. Die Einlassöffnung 46.2 ist derart in der Seitenwand 32 des Wechsel-Moduls 20 angeordnet, dass die Druckleitung 80.2 mit der Einlassöffnung 46.2 bzw. der zweiten Druckkammer 42 automatisch in Verbindung steht, wenn das Wechsel-Modul 20 in die stationäre Betriebsposition gebracht ist.

Wie Fig. 6 andeutet, kann in die Druckleitungen 80.1 und 80.2 jeweils ein Fluid eingeleitet werden, welches aus einer Druckleitung 80 entnommen wird und den Druckleitungen 80.1 und 80.2 über ein steuerbares Regelventil 52 zugeführt werden kann. Das Regelventil 52 kann beispielsweise als Proportionalventil ausgeführt sein, welches es erlaubt, den jeweiligen Druck in den Druckleitungen 80.1 bzw. 80.2 und somit in der ersten Druckkammer 41 bzw. in der zweiten Druckkammer 42 unabhängig voneinander in Abhängigkeit von Steuersignalen zu steuern.

Die Antriebsvorrichtung 40 umfasst weiterhin ein Kontrollsystem 50, welches die Positionierung der Fokussierungsoptik 25 kontrolliert und eine Verstellung der Fokussierungsoptik gemäss entsprechenden Vorgaben der Steuerung der Laserbearbeitungsmaschine 1 (abhängig von dem jeweiligen Bearbeitungsprozess, der von der Laserbearbeitungsmaschine 1 ausgeführt werden soll) zu steuern. Das Kontrollsystem 50 umfasst eine Messeinrichtung 55 zur Bestimmung der Position der Fokussierungsoptik 25 und einen Regler 51. Die Messeinrichtung 55 erzeugt Signale, welche die momentane Position ("Ist-Wert") der Fokussierungsoptik 25 (in Fig. 6 als Zᵢₛₜ dargestellt) repräsentieren. Der Regler 55 hat die Aufgabe, die Signale der Messeinrichtung 55 mit Signalen zu vergleichen, die einen von der Steuerung der Laserbearbeitungsmaschine 1 vorgegebenen Soll-Wert für die Position der Fokussierungsoptik 25 (in Fig. 6 als Zₛₒₗₗ dargestellt) angeben, und - bei einer Abweichung zwischen Soll- und Ist-Wert - mittels geeigneter Signale auf das Regelventil 52 derart einzuwirken, dass die Fokussierungsoptik 25 in die vorgegebene SollPosition gebracht wird.

Wie die Fig. 5 zeigt, kann die Messeinrichtung 55 in das Wechsel-Modul 20 integriert werden. Die Messeinrichtung 55 kann beispielsweise als berührungsloses Messsystem ausgebildet werden, beispielsweise auf der Grundlage eines (beispielsweise mit optischen oder magnetischen Mitteln lesbaren) Massstabs, der an der Linsenfassung 26 angeordnet werden kann, und eines entsprechenden Lesekopfes, der an der Tragstruktur 30 befestigt werden kann und zum Ablesen des Massstabs geeignet ist.

Als erstes bzw. zweites Fluid der Antriebseinrichtung 40 kann beispielsweise ein Gas oder eine geeignete Flüssigkeit dienen. Als Flüssigkeit wäre insbesondere eine Kühlflüssigkeit (beispielsweise deionisiertes Wasser) geeignet, was den Vorteil bietet, dass die Kühlflüssigkeit eine wirksame Kühlung der Linsenfassung 26 bei hohen Laserleistungen gewährleisten kann.

Das Wechsel-Modul 20 ist derart gestaltet, dass Prozessgase aus einem Raum, der an der Austrittsseite des Laserstrahls 5 an die Fokussierungsoptik 25 angrenzt, durch die Austrittsöffnung 36.1 des Wechsel-Moduls 20 und durch die Düse 6 des Bearbeitungskopfes 10 auf das zu bearbeitende Werkstück 2 geleitet werden können.

Um eine Versorgung mit Prozessgas zu gewährleisten, ist in das Wechsel-Modul 20 eine Prozessgas-Kammer 60 integriert, welche mit einem Prozessgas bzw. einem Gemisch von Prozessgasen beflutbar ist. Wie die Fig. 5 zeigt, weist die Linsenfassung 26 an einer einem dritten Wandabschnitt 45.3 der Hohlraumwand 45 gegenüberliegenden Seite einen ersten Wandbereich 61 auf, der zusammen mit dem dritten Wandabschnitt 45.3 der Hohlraumwand 45 die Prozessgas-Kammer 60 begrenzt.

Zur Versorgung mit Prozessgas ist der stationäre Teil 11 des Bearbeitungskopfes 10 mit einer Versorgungseinrichtung 90 verbunden, welche Prozessgas unter einem hohen Druck (beispielsweise 25 bar) zur Verfügung stellt. Die Seitenwand 32 des Wechsel-Moduls 20 weist im Bereich der Prozessgas-Kammer 60 mehrere Einlassöffnungen 62 für das Prozessgas auf. Die Einlassöffnungen 62 sind jeweils derart angeordnet ist, dass sie an die Versorgungseinrichtung 90 für das Prozessgas angeschlossen sind, wenn die Tragstruktur 30 in die stationäre Betriebsposition gebracht ist.

Die Prozessgas-Kammer 60 ist über eine Vielzahl Austrittsöffnungen 63 für das jeweilige Prozessgas mit einem Raumbereich 65 verbunden, der auf der Austrittsseite des Laserstrahls 5 an die Fokussierungsoptik 25 angrenzt und in den über jede der Austrittsöffnungen 63 jeweils ein Prozessgasstrom 64 (in Fig. 4 und 5 für eine der Austrittsöffnungen 63 durch einen Pfeil gekennzeichnet) aus der Prozessgas-Kammer 60 einleitbar ist.

Wie Fig. 5 zeigt, ist der jeweilige Prozessgasstrom 64 auf der Austrittsseite des Laserstrahls 5 auf die Fokussierungsoptik 25 gerichtet und wird von dort in Richtung auf die Austrittsöffnung 36.1 bzw. den Fokus 5' umgelenkt. Da der jeweilige Prozessgasstrom 64 auf die Fokussierungsoptik 25 trifft, kann das Prozessgas beispielsweise zum Kühlen der Fokussierungsoptik 25 genutzt werden.

Da der jeweilige Prozessgasstrom 64 (abhängig von dem jeweiligen Bearbeitungsprozess) unter einem hohen Druck (beispielsweise 25 bar) auf die Fokussierungsoptik 25 trifft, können durch das Prozessgas relativ grosse Kräfte übertragen werden, welche in Richtung auf die Eintrittsöffnung 34.1 im Wesentlichen koaxial zur Ausbreitungsrichtung 5.1 des Laserstrahls wirken.

Die Prozessgas-Kammer 60 ist so gestaltet, dass diese durch das Prozessgas bedingten Kräfte kompensiert werden können. Zu diesem Zweck umfasst der erste Wandbereich 61 der Linsenfassung eine mit dem Prozessgas beaufschlagte Kolbenfläche 61.1, welche derart angeordnet ist, dass Kräfte, die mittels des jeweiligen Prozessgasstroms 64 an der Austrittsseite des Laserstrahls auf die Fokussierungsoptik 26 übertragen werden, durch Kräfte, die mittels des Prozessgases auf die Kolbenfläche 61.1 übertragen werden, ganz oder teilweise kompensiert sind. In welchem Masse die genannten Kräfte kompensiert werden, hängt im Wesentlichen von der Grösse der Kolbenfläche 61.1 im Vergleich zur Fläche der Fokussierungsoptik 25, welche durch das Prozessgas beaufschlagt wird, ab. Durch eine geeignete Wahl der Grösse der Kolbenfläche 61.1 kann somit erreicht werden, dass alle durch das Prozessgas bedingten Kräfte auf die Fokussierungsoptik 25 exakt kompensiert werden.

Die Prozessgas-Kammer 60 ist konzentrisch zur Ausbreitungsrichtung 5.1 des Laserstrahls 5 ausgebildet. Weiterhin weist die mit dem Prozessgas beaufschlagbare Kolbenfläche 61.1 die Form eines bezüglich der Ausbreitungsrichtung 5.1 des Laserstrahls 5 konzentrischen Ringes auf. Da die Prozessgas-Kammer 60 somit koaxial zur Ausbreitungsrichtung 5.1 des Laserstrahls und zudem ringförmig um die Fokussieroptik 25 herum angeordnet ist, können durch diese Anordnung prozessgasbedingte Störkräfte effizient eliminiert werden.

Die Anordnung der Prozessgas-Kammer 60 hat weiterhin Vorteile im Hinblick auf Prozessgas-Wechsel, d. h. den Ersatz eines in einem ersten Bearbeitungsschritt verwendeten ersten Prozessgases durch ein zweites (verschiedenes) Prozessgas in einem zweiten (folgenden) Bearbeitungsschritt. Die Prozessgas-Kammer 60 wird von dem jeweiligen Prozessgas auf dessen Weg zu den Austrittsöffnungen 63 jeweils durchströmt. Bei einem Prozessgas-Wechsel von dem ersten Prozessgas zu dem zweiten Prozessgas wird die Prozessgas-Kammer 60 von dem zweiten Prozessgas "gespült", mit dem Effekt, dass nach relativ kurzer Zeit keine Rückstände des ersten Prozessgases mehr vorhanden sind. Die Prozessgas-Kammer 60 bildet somit keinen "toten" Raum, in dem Reste des ersten Prozessgases über eine lange Zeit gespeichert werden können. Eine lange andauernde Verunreinigung des zweiten Prozessgases durch das erste Prozessgas kann nach einem Prozessgas-Wechsel somit vermieden werden bzw. eine spezielle Reinigung (Spülung) der Prozessgas-Kammer 66 vor einem Prozessgas-Wechsel kann innerhalb kurzer Zeit durchgeführt werden.

Das Wechsel-Modul 20 ist derart gestaltet, dass die Fokussierungsoptik 25 auf der Eintrittsseite des Laserstrahls 5 mit einem Gas beaufschlagt werden kann, beispielsweise zum Reinigen und/oder zum Kühlen der Fokussierungsoptik 25.

Um eine Zufuhr dieses Gases zu gewährleisten, ist in das Wechsel-Modul 20 ein Gasraum 70 integriert, welcher mit Gas, beispielsweise gereinigter Luft, beflutbar ist. Wie die Fig. 5 zeigt, weist die Linsenfassung 26 an einer einem vierten Wandabschnitt 45.4 der Hohlraumwand 45 gegenüberliegenden Seite einen zweiten Wandbereich 71 auf, der zusammen mit dem vierten Wandabschnitt 45.4 der Hohlraumwand 45 den Gasraum 70 begrenzt. Wie die Fig. 3-6 zeigen, ist der Gasraum 70 von der Prozessgas-Kammer 60 durch eine (ringförmig bezüglich der Ausbreitungsrichtung 5.1 des Laserstrahls 5) ausgebildete Trennwand 47 getrennt, welche gegenüber der Linsenfassung 26 durch eine Dichtung 43 abgedichtet ist.

Zur Versorgung des Gasraums 70 mit einem Gas ist der stationäre Teil 11 des Bearbeitungskopfes 10 mit einer Versorgungseinrichtung 95 verbunden, welche das benötigte Gas unter einem Überdruck zur Verfügung stellt. Die Seitenwand 32 des Wechsel-Moduls 20 weist im Bereich der Prozessgas-Kammer 70 mehrere Einlassöffnungen 72 für das jeweilige Gas auf. Die Einlassöffnungen 72 sind jeweils derart angeordnet, dass sie an die Versorgungseinrichtung 95 angeschlossen sind, wenn die Tragstruktur 30 in die stationäre Betriebsposition gebracht ist.

Der Gasraum 70 ist über eine Vielzahl Austrittsöffnungen 73 für das jeweilige Gas mit einem Raumbereich 75 verbunden, der auf der Eintrittsseite des Laserstrahls 5 an die Fokussierungsoptik 25 angrenzt und in den über jede der Austrittsöffnungen 73 jeweils ein Gasstrom 74 (in Fig. 4 und 5 für eine der Austrittsöffnungen 73 durch einen Pfeil gekennzeichnet) aus dem Gasraum 70 einleitbar ist.

Wie Fig. 5 zeigt, ist der jeweilige Gasstrom 74 auf der Eintrittsseite des Laserstrahls 5 auf die Fokussierungsoptik 25 gerichtet. Da der jeweilige Gasstrom 74 auf die Fokussierungsoptik 25 trifft, kann das Gas beispielsweise zum Reinigen und/oder Kühlen der Fokussierungsoptik 25 genutzt werden.

Da der jeweilige Gasstrom 74 unter einem Überdruck auf die Fokussierungsoptik 25 trifft, können durch das Gas relativ grosse Kräfte übertragen werden, welche in Richtung auf die Austrittsöffnung 36.1 im Wesentlichen koaxial zur Ausbreitungsrichtung 5.1 des Laserstrahls wirken.

Der Gasraum 70 ist so gestaltet, dass diese durch das Gas bedingten Kräfte kompensiert werden können. Zu diesem Zweck umfasst der zweite Wandbereich 71 der Linsenfassung 26 eine mit dem Gas beaufschlagte Kolbenfläche 71.1 (die äusseren Ränder der Kolbenfläche sind in Fig. 4 und 5 durch Pfeile gekennzeichnet), welche derart angeordnet ist, dass Kräfte, die mittels des jeweiligen Gasstrom 74 an der Eintrittsseite des Laserstrahls 5 auf die Fokussierungsoptik 25 übertragen werden, durch Kräfte, die mittels des Gases auf die Kolbenfläche 71.1 übertragen werden, ganz oder teilweise kompensiert sind. In welchem Masse die genannten Kräfte kompensiert werden, hängt im Wesentlichen von der Grösse der Kolbenfläche 71.1 im Vergleich zur Fläche der Fokussierungsoptik 25, welche durch das Gas beaufschlagt wird, ab. Durch eine geeignete Wahl der Grösse der Kolbenfläche 71.1 kann somit erreicht werden, dass alle durch das Gas bedingten Kräfte auf die Fokussierungsoptik 25 exakt kompensiert werden.

Der Gasraum 70 ist konzentrisch zur Ausbreitungsrichtung 5.1 des Laserstrahls 5 ausgebildet. Weiterhin weist die mit dem Gas beaufschlagbare Kolbenfläche 71.1 die Form eines bezüglich der Ausbreitungsrichtung 5.1 des Laserstrahls 5 konzentrischen Ringes auf. Da der Gasraum 70 somit koaxial zur Ausbreitungsrichtung 5.1 des Laserstrahls und zudem ringförmig um die Fokussieroptik 25 herum angeordnet ist, können durch diese Anordnung die durch das Gas bedingten Störkräfte effizient eliminiert werden.

Weiterhin sind die Ausstattung des Wechsel-Moduls 20 mit der Prozessgas-Kammer 60 und dem Gasraum 70 jeweils Optionen, die auf vorteilhafte Weise mit beliebigen Antriebseinrichtungen für die Fokussierungsoptik kombiniert werden können und jeweils die Grundlage dafür schaffen, dass die Fokussierungsoptik 25 mit geringen Kräften, präzise und im Wesentlichen unbeeinflusst von Störkräften verstellt werden kann.

## Patentansprüche

1. Wechsel-Modul (20) für einen modularen Bearbeitungskopf (10) einer Laserbearbeitungsmaschine (1) zur Bearbeitung eines Werkstücks (2) mittels eines Laserstrahls (5), mit einer Fokussierungsoptik (25) für den Laserstrahl (5), mindestens einem angetriebenen Teil (41.1, 42.1, 26) einer Antriebseinrichtung (40), und einer Tragstruktur (30) für die Fokussierungsoptik (25) und die jeweiligen angetriebenen Teile (41.1, 42.1, 26) der Antriebseinrichtung (40), wobei die Fokussierungsoptik (25) und die jeweiligen angetriebenen Teile (41.1, 42.1, 26) der Antriebseinrichtung (40) derart an der Tragstruktur (30) angeordnet sind, dass die Fokussierungsoptik (25) mittels der Antriebseinrichtung (40) relativ zur Tragstruktur (30) bewegbar ist, wobei die Antriebseinrichtung (40) als fluidischer Antrieb ausgebildet ist und mindestens eines der jeweiligen angetriebenen Teile (41.1, 42.1, 26) mit einem unter einem Druck stehenden Fluid antreibbar ist, **dadurch gekennzeichnet, dass** die Tragstruktur (30) des Wechsel-Moduls als Hohlkörper ausgebildet ist und ein angetriebenes Teil der Antriebseinheit als Kolbeneinheit (26) ausgebildet ist, welche in einem Hohlraum des Hohlkörpers angeordnet ist und an einer Hohlraumwand (45) des Hohlraums geführt ist, die Kolbeneinheit (26) einen Durchgangskanal (29) für den Laserstrahl (5) aufweist und die Fokussierungsoptik (25) im Durchgangskanal angeordnet und an der Kolbeneinheit befestigt ist, und das mindestens eine angetriebene Teil (26) der Antriebseinrichtung (40) gegenüberliegende Kolbenflächen (41.1, 42.1) aufweist, die jeweils mit dem fluidischen Druck beaufschlagbar sind, so dass die Fokussierungsoptik (25) abhängig von der Druckbeaufschlagung der gegenüberliegenden Kolbenflächen (41.1, 42.1) über einen Verstellbereich hinweg vor- und zurück bewegbar und an einer beliebigen Position dieses Verstellbereichs fluidisch haltbar ist.

2. Kombination aus einem modularen Bearbeitungskopf (10) und einem Wechselmodul (20) nach Anspruch 1, wobei das Wechsel-Modul (20) die Antriebseinrichtung (40) umfasst.

3. Kombination nach Anspruch 2, wobei die Kolbeneinheit (26) koaxial zur Ausbreitungsrichtung (5.1) des Laserstrahls (5) bewegbar ist.

4. Kombination nach einem der Ansprüche 2 oder 3, wobei die Antriebseinheit (40) eine erste Druckkammer 41) und eine zweite Druckkammer (42) umfasst und die Kolbeneinheit (26) eine erste Kolbenfläche (41.1) und eine zweite Kolbenfläche (42.1) aufweist, wobei die erste Druckkammer (41) von einem ersten Wandabschnitt (45.1) der Hohlraumwand (45) und der ersten Kolbenfläche (41.1) begrenzt ist und die zweite Druckkammer (42) von einem zweiten Wandabschnitt (45.2) der Hohlraumwand (45) und der zweiten Kolbenfläche (42.1) begrenzt ist, und wobei die jeweiligen Druckkammern (41, 42) derart ausgebildet sind, dass bei einer Bewegung der Kolbeneinheit entlang der Hohlraumwand (45) das Volumen der ersten Druckkammer und das Volumen der zweiten Druckkammer gegensinnig vergrössert bzw. verkleinert werden.

5. Kombination nach Anspruch 4, wobei die erste Druckkammer (41) mit einem ersten Fluid (80.1) und die zweite Druckkammer (42) mit einem zweiten Fluid (80.2) beflutbar ist.

6. Kombination nach einem der Ansprüche 4 oder 5, wobei die erste Druckkammer (41) und/oder die zweite Druckkammer (42) konzentrisch zur Ausbreitungsrichtung (5.1) des Laserstrahls (5) ausgebildet sind.

7. Kombination nach einem der Ansprüche 4 bis 6, wobei die erste Kolbenfläche (41.1) und/oder die zweite Kolbenfläche (42.1) die Form eines bezüglich der Ausbreitungsrichtung (5.1) des Laserstrahls (5) konzentrischen Ringes aufweisen.

8. Kombination nach einem der Ansprüche 2 bis 7, wobei die Kolbeneinheit (26) an einer einem dritten Wandabschnitt (45.3) der Hohlraumwand (45) gegenüberliegenden Seite einen ersten Wandbereich (61) aufweist, der zusammen mit dem dritten Wandabschnitt (45.3) der Hohlraumwand (45) eine mit einem Prozessgas beflutbare Prozessgas-Kammer (60) begrenzt, wobei die Prozessgas-Kammer über mindestens eine Austrittsöffnung (63) für das Prozessgas mit einem Raumbereich (65) verbunden ist, der auf der Austrittsseite des Laserstrahls an die Fokussierungsoptik (25) angrenzt und in den ein Prozessgasstrom (64) aus der Prozessgas-Kammer (60) über die Austrittsöffnung (63) für das Prozessgas einleitbar ist.

9. Kombination nach Anspruch 8, wobei der erste Wandbereich (61) der Kolbeneinheit eine mit dem Prozessgas beaufschlagbare Kolbenfläche (61.1) umfasst, welche derart angeordnet ist, dass Kräfte, die mittels des Prozessgasstroms an der Austrittsseite des Laserstrahls auf die Fokussierungsoptik (25) übertragbar sind, durch Kräfte, die mittels des Prozessgases auf die Kolbenfläche (61.1) übertragbar sind, ganz oder teilweise kompensiert sind.

10. Kombination nach Anspruch 9, wobei die Prozessgas-Kammer (60) konzentrisch zur Ausbreitungsrichtung (5.1) des Laserstrahls (5) ausgebildet ist und die mit dem Prozessgas beaufschlagbare Kolbenfläche (61.1) die Form eines bezüglich der Ausbreitungsrichtung (5.1) des Laserstrahls (5) konzentrischen Ringes aufweist.

11. Kombination nach einem der Ansprüche 2 bis 10, wobei die Kolbeneinheit (26) an einer einem vierten Wandabschnitt (45.4) der Hohlraumwand (45) gegenüberliegenden Seite einen zweiten Wandbereich (71) aufweist, der zusammen mit dem vierten Wandabschnitt (45.4) der Hohlraumwand (45) einen Gasraum (70) für ein Gas begrenzt, wobei der Gasraum (70) über mindestens eine Austrittsöffnung (73) für dieses Gas mit einem Raumbereich (75) verbunden ist, der an der Eintrittsseite des Laserstrahls (5) an die Fokussierungsoptik (25) angrenzt und in den ein Gasstrom (74) aus dem Gasraum (70) über die Austrittsöffnung (73) einleitbar ist.

12. Kombination nach Anspruch 11, wobei der zweite Wandbereich (71) eine mit dem Gas beaufschlagbare Kolbenfläche (71.1) umfasst, welche derart angeordnet ist, dass Kräfte, die mittels des Gasstroms (74) an der Eintrittsseite des Laserstrahls (5) auf die Fokussierungsoptik (25) übertragbar sind, durch Kräfte, die mittels des Gases auf die Kolbenfläche (71.1) übertragbar sind, ganz oder teilweise kompensiert sind.

13. Kombination nach Anspruch 12, wobei der Gasraum (70) konzentrisch zur Ausbreitungsrichtung (5.1) des Laserstrahls (5) ausgebildet ist und die mit dem Gas beaufschlagbare Kolbenfläche (71.1) die Form eines bezüglich der Ausbreitungsrichtung (5.1) des Laserstrahls (5) konzentrischen Ringes aufweist.

14. Kombination nach einem der Ansprüche 2 bis 13, wobei das Wechsel-Modul (20) eine Messeinrichtung (55) zur Bestimmung der Position (Zᵢₛₜ) der Fokussierungsoptik (25) umfasst.

15. Kombination nach einem der Ansprüche 4 bis 7, wobei die Hohlraumwand (45) eine Einlassöffnung (46.1) für das erste Fluid und eine Einlassöffnung (46.2) für das zweite Fluid aufweist und der stationäre Teil (11) des Bearbeitungskopfes (10) eine Versorgungseinrichtung (80.1) für das erste Fluid und eine Versorgungseinrichtung (80.2) für das zweite Fluid aufweist und wobei die Einlassöffnungen (46.1, 46.2) für das erste und das zweite Fluid derart angeordnet sind, dass die Einlassöffnung (46.1) für das erste Fluid an die Versorgungseinrichtung (80.1) für das erste Fluid und die Einlassöffnung (46.2) für das zweite Fluid an die Versorgungseinrichtung (80.2) für das zweite Fluid angeschlossen sind, wenn die Tragstruktur (30) in die stationäre Betriebsposition gebracht ist.

16. Kombination nach einem der Ansprüche 8 bis 10, wobei die Hohlraumwand (45) eine Einlassöffnung (62) für das Prozessgas aufweist und der stationäre Teil (11) des Bearbeitungskopfes (10) eine Versorgungseinrichtung (90) für Prozessgas umfasst und wobei diese Einlassöffnung (62) derart angeordnet ist, dass sie an die versorgungseinrichtung (90) für das Prozessgas angeschlossen ist, wenn die Tragstruktur (30) in die stationäre Betriebsposition gebracht ist.

17. Kombination nach einem der Ansprüche 11 bis 13, wobei die Hohlraumwand (45) eine Einlassöffnung (72) für ein in den Gasraum (70) einleitbares Gas aufweist und der stationäre Teil (11) des Bearbeitungskopfes eine Versorgungseinrichtung (95) für dieses Gas umfasst und wobei die diese Einlassöffnung (72) derart angeordnet ist, dass sie an die Versorgungseinrichtung (95) für dieses Gas angeschlossen ist, wenn die Tragstruktur (30) in die stationäre Betriebsposition gebracht ist.

18. Kombination nach einem der Ansprüche 2 bis 17, wobei der Bearbeitungskopf (10) einen stationären Teil (11) umfasst, und die Tragstruktur (30) des Moduls (20) in eine stationäre Betriebsposition bezüglich des stationären Teils (11) des Bearbeitungskopfes (10) bringbar ist.

19. Laserbearbeitungsmaschine (1) mit einer Kombination aus einem modularen Bearbeitungskopf (10) und einem Wechsel-modul (20) nach einem der Ansprüche 2 bis 18.

## Claims

1. Exchangeable module (20) for a modular machining head (10) of a laser machining tool (1) for machining a workpiece (2) by means of a laser beam (5), comprising a focusing lens (25) for the laser beam (5), at least one driven part (41.1, 42.1, 26) of a drive device (40) and a carrying structure (30) for the focusing lens (25) and the respective driven parts (41.1, 42.1, 26) of the drive device (40), wherein the focusing lens (25) and the respective driven parts (41.1, 42.1, 26) of the drive device (40) are arranged on the carrying structure (30) such that the focusing lens (25) can be moved relative to the carrying structure (30) by means of the drive device (40), wherein the drive device (40) is configured as a fluid drive, and at least one of the respective driven parts (41.1, 42.1, 26) can be driven by a pressurized fluid.,
**characterized in that**
the carrying structure (30) of the exchangeable module is configured as a hollow body and one driven part of the drive unit is configured as a piston unit (26) which is arranged in a cavity of the hollow body and guided along a cavity wall (45) of the cavity,
the piston unit (26) comprises a through-passage channel (29) for the laser beam (5) and the focussing lens (25) is arranged in the through-passage channel and fastened to the piston unit, and the at least one driven part (26) of the drive device (40) has opposing piston surfaces (41.1, 42.1), to each of which the fluid pressure can be applied, so that the focussing lens (25) can be moved back and forth beyond an adjustment range in accordance with the applied pressure of the opposing piston surfaces (41.1, 42.1) and can be fluidically held at any desired position of this adjustment range.

2. A combination of a modular machining head (10) and an exchangeable module (20) according to Claim 1, wherein the exchangeable module (20) comprises the drive device (40).

3. The combination according to Claim 2, wherein the piston unit (26) is moveable coaxially to the propagation direction (5.1) of the laser beam (5).

4. The combination according to any one of Claims 2 or 3, wherein the drive unit(40) comprises a first pressure chamber (41) and a second pressure chamber (42), and the piston unit (26) has a first piston surface (41.1) and a second piston surface (42.1), wherein the first pressure chamber (41) is bounded by a first wall section (45.1) of the cavity wall (45) and the first piston surface (41.1), and the second pressure chamber (42) is bounded by a second wall section (45.2) of the cavity wall (45) and the second piston surface (42.1), and wherein the respective pressure chambers (41, 42) are configured such that during a motion of the piston unit along the cavity wall (45) the volume of the first pressure chamber and the volume of the second pressure chamber are inversely enlarged and reduced.

5. The combination according to Claim 4, wherein the first pressure chamber (41) can be flooded with a first fluid (80.1) and the second pressure chamber (42) with a second fluid (80.2).

6. The combination according to any one of Claims 4 or 5, wherein the first pressure chamber (41) and/or the second pressure chamber (42) are configured concentrically to the propagation direction (5.1) of the laser beam (5).

7. The combination according to any one of Claims 4 to 6, wherein the first piston surface (41.1) and/or the second piston surface (42.1) have an annular shape and are concentric with respect to the propagation direction (5.1) of the laser beam (5).

8. The combination according to any one of Claims 2 to 7, wherein the piston unit (26) has a first wall region (61) on a side opposite a third wall section (45.3) of the cavity wall (45), which together with the third wall section (45.3) of the cavity wall (45) bounds a process gas chamber (60) floodable with a process gas,
wherein the process gas chamber is connected via at least one outlet opening (63) for the process gas to a spatial area (65) which adjoins the focusing lens (25) on the outlet side of the laser beam, and into which a process gas stream (64) can be introduced from the process gas chamber (60) via the outlet opening (63) for the process gas.

9. The combination according to Claim 8, wherein the first wall region (61) of the piston unit comprises a piston surface (61.1) that can be pressurised with the process gas and is arranged such that forces which can be transferred to the focusing lens (25) by means of the process gas stream at the outlet side of the laser beam, are wholly or partly compensated by forces that can be transferred onto the piston surface (61.1) by means of the process gas.

10. The combination according to Claim 9, wherein the process gas chamber (60) is configured concentrically to the propagation direction (5.1) of the laser beam (5) and the piston surface (61.1) which can be pressurized with the process gas has an annular shape concentric with respect to the propagation direction (5.1) of the laser beam (5).

11. The combination according to any one of Claims 2 to 10, wherein the piston unit (26) has a second wall region (71) on a side opposite a fourth wall section (45.4) of the cavity wall (45), which together with the fourth wall section (45.4) of the cavity wall (45) bounds a gas chamber (70) for a gas, wherein the gas chamber (70) is connected via at least one outlet opening (73) for this gas to a spatial area (75) which adjoins the focusing lens (25) on the inlet side of the laser beam (5), and into which a gas stream (74) from the gas chamber (70) can be introduced via the outlet opening (73).

12. The combination according to Claim 11, wherein the second wall region (71) comprises a piston surface (71.1) that can be pressurized with the gas, which is arranged such that forces which can be transferred to the focusing lens (25) by means of the gas stream (74) at the inlet side of the laser beam, are wholly or partly compensated by forces that can be transferred onto the piston surface (71.1) by means of the gas.

13. The combination according to Claim 12, wherein the gas chamber (70) is configured concentrically to the propagation direction (5.1) of the laser beam (5) and the piston surface (71.1) which can be pressurized with the gas has an annular shape concentric with respect to the propagation direction (5.1) of the laser beam (5).

14. The combination according to any one of Claims 2 to 13, wherein the exchangeable module (20) comprises a measurement device (55) for determining the position (Zᵢₛₜ) of the focusing lens (25).

15. The combination according to any one of Claims 4 to 7, wherein the cavity wall (45) has an inlet opening (46.1) for the first fluid and an inlet opening (46.2) for the second fluid, and the stationary part (11) of the machining head (10) has a supply device (80-1) for the first fluid and a supply device (80.2) for the second fluid, and wherein the inlet openings (46.1, 46.2) for the first and the second fluid are arranged such that the inlet opening (46.1) for the first fluid is connected to the supply device (80.1) for the first fluid and the inlet opening (46.2) for the second fluid is connected to the supply device (80.2) for the second fluid when the carrying structure (30) is brought into the stationary operating position.

16. The combination according to any one of Claims 8 to 10, wherein the cavity wall (45) comprises an inlet opening (62) for the process gas and the stationary part (11) of the machining head (10) comprises a supply device (90) for process gas, and wherein this inlet opening (62) is arranged such that it is connected to the supply device (90) for the process gas when the carrying structure (30) is brought into the stationary operating position.

17. The combination according to any one of Claims 11 to 13, wherein the cavity wall (45) has an inlet opening (72) for a gas which can be introduced into the gas chamber (70) and the stationary part (11) of the machining head comprises a supply device (95) for this gas, and wherein this inlet opening (72) is arranged such that it is connected to the supply device (95) for this gas when the carrying structure (30) is brought into the stationary operating position.

18. The combination according to any one of Claims 2 to 17, wherein the machining head (10) comprises a stationary part (11) and the carrying structure (30) of the module (20) can be brought into a stationary operating position with respect to the stationary part (11) of the machining head (10).

19. Laser machining tool (1) with a combination of a modular machining head (10) and an exchangeable module (20) according to any one of Claims 2 to 18.

## Revendications

1. Module échangeable (20) pour une tête d'usinage modulaire (10) d'une machine d'usinage au laser (1) pour usiner une pièce à travailler (2) au moyen d'un rayon laser (5), comprenant une optique de focalisation (25) pour le rayon laser (5), au moins une partie entraînée (41.1, 42.1, 26) d'un dispositif d'entraînement (40), et une structure de support (30) pour l'optique de focalisation (25) et les parties entraînées (41.1, 42.1, 26) respectives du dispositif d'entraînement (40), dans lequel l'optique de focalisation (25) et les parties entraînées (41.1, 42.1, 26) respectives du dispositif d'entraînement (40) sont disposées sur la structure de support (30) de telle sorte, que l'optique de focalisation (25) peut être déplacée au moyen du dispositif d'entraînement (40) par rapport à la structure de support (30), dans lequel le dispositif d'entraînement (40) est réalisé comme un entraînement fluidique et au moins l'une des parties entraînées (41.1, 42.1, 26) respectives peut être entraînée par un fluide sous pression, **caractérisé en ce que** la structure de support (30) du module échangeable est réalisée comme un corps creux et une partie entraînée de l'unité d'entraînement est réalisée comme une unité de piston (26) disposée dans une cavité du corps creux et guidée sur une paroi de cavité (45) de la cavité, l'unité de piston (26) présente un canal de passage (29) pour le rayon laser (5) et l'optique de focalisation (25) est disposée dans le canal de passage et fixée sur l'unité de piston, et ladite au moins une partie entraînée (26) du dispositif d'entraînement (40) présente des surfaces de piston (41.1, 42.1) opposées qui peuvent respectivement être mises en pression fluidique, de sorte que l'optique de focalisation (25) peut être avancée et reculée en fonction de la mise en pression des surfaces de piston opposées (41.1, 42.1) sur une plage de réglage et peut être retenue de manière fluidique dans une position quelconque de cette plage de réglage.

2. Combinaison d'une tête d'usinage modulaire (10) et d'un module échangeable (20) selon la revendication 1, dans laquelle le module échangeable (20) comprend le dispositif d'entraînement (40).

3. Combinaison selon la revendication 2, dans laquelle l'unité de piston (26) peut être déplacée de manière coaxiale à la direction de propagation (5.1) du rayon laser (5).

4. Combinaison selon l'une quelconque des revendications 2 ou 3, dans laquelle l'unité d'entraînement (40) présente une première chambre de pression (41) et une deuxième chambre de pression (42), et l'unité de piston (26) présente une première surface de piston (41.1) et une deuxième surface de piston (42.1), dans laquelle la première chambre de pression (41) est délimitée par une première portion de paroi (45.1) de la paroi de cavité (45) et la première surface de piston (41.1) et la deuxième chambre de pression (42) est délimitée par une deuxième portion de paroi (45.2) de la paroi de cavité (45) et la deuxième surface de piston (42.1), et dans laquelle les chambres de pression (41, 42) respectives sont réalisées de telle sorte qu'en cas de mouvement de l'unité de piston suivant la paroi de cavité (45) le volume de la première chambre de pression et le volume de la deuxième chambre de pression sont augmentés ou diminués en sens inverse.

5. Combinaison selon la revendication 4, dans laquelle la première chambre de pression (41) peut être remplie d'un premier fluide (80.1) et la deuxième chambre de pression (42) peut être remplie d'un deuxième fluide (80.2).

6. Combinaison selon l'une quelconque des revendications 4 ou 5, dans laquelle la première chambre de pression (41) et/ou la deuxième chambre de pression (42) sont réalisées de manière concentrique à la direction de propagation (5.1) du rayon laser (5).

7. Combinaison selon l'une quelconque des revendications précédentes 4 à 6, dans laquelle la première surface de piston (41.1) et/ou la deuxième surface de piston (42.1) présentent la forme d'un anneau concentrique par rapport à la direction de propagation (5.1) du rayon laser (5).

8. Combinaison selon l'une quelconque des revendications 2 à 7, dans laquelle l'unité de piston (26) présente sur un côté opposé à la troisième portion de paroi (45.3) de la paroi de cavité (45) une première zone de paroi (61) qui délimite avec la troisième portion de paroi (45.3) de la paroi de cavité (45) une chambre à gaz de process (60) pouvant être remplie d'un gaz de process, dans laquelle la chambre à gaz de process est reliée par au moins une ouverture de sortie (63) pour le gaz de process à une zone d'espace (65) adjacente à l'optique de focalisation (25), du côté sortie du rayon laser, et dans laquelle un courant de gaz de process (64) peut être introduit à partir de la chambre à gaz de process (60) en passant par l'ouverture de sortie (63) pour le gaz de process.

9. Combinaison selon la revendication 8, dans laquelle la première zone de paroi (61) de l'unité de piston comprend une surface de piston (61.1) pouvant être mise en pression par le gaz de process et qui est disposée de telle sorte que des forces transmissibles au moyen du courant de gaz de process à l'optique de focalisation (25), du côté sortie du rayon laser, soient compensées en totalité ou en partie par des forces transmissibles à la surface de piston (61.1) au moyen du gaz de process.

10. Combinaison selon la revendication 9, dans laquelle la chambre à gaz de process (60) est réalisée de manière concentrique à la direction de propagation (5.1) du rayon laser (5), et la surface de piston (61.1) qui peut être mise en pression par le gaz de process présente la forme d'un anneau concentrique par rapport à la direction de propagation (5.1) du rayon laser (5) .

11. Combinaison selon l'une quelconque des revendications 2 à 10, dans laquelle l'unité de piston (26) présente sur un côté opposé à une quatrième portion de paroi (45.4) de la paroi de cavité (45) une deuxième zone de paroi (71) qui délimite avec la quatrième portion de paroi (45.4) de la paroi de cavité (45) un espace à gaz (70) pour un gaz, dans laquelle l'espace à gaz (70) est relié par au moins une ouverture de sortie (73) pour ce gaz à une zone d'espace (75) qui est adjacente à l'optique de focalisation (25), du côté d'entrée du rayon laser (5), et dans laquelle un courant de gaz (74) peut être introduit à partir de l'espace de gaz (70) en passant par l'ouverture de sortie (73).

12. Combinaison selon la revendication 11, dans laquelle la deuxième zone de paroi (71) comprend une surface de piston (71.1) pouvant être mise en pression par le gaz et qui est disposée de telle sorte que des forces transmissibles au moyen du courant de gaz (74) à l'optique de focalisation (25), du côté entrée du rayon laser (5), soient compensées en totalité ou en partie par des forces transmissibles à la surface de piston (71.1) au moyen du gaz.

13. Combinaison selon la revendication 12, dans laquelle l'espace à gaz (70) est réalisé de manière concentrique à la direction de propagation (5.1) du rayon laser (5), et la surface de piston (71.1) pouvant être mise en pression par le gaz présente la forme d'un anneau concentrique par rapport à la direction de propagation (5.1) du rayon laser (5).

14. Combinaison selon l'une quelconque des revendications 2 à 13, dans laquelle le module échangeable (20) comprend un dispositif de mesure (55) pour déterminer la position (Zᵢₛₜ) de l'optique de focalisation (25).

15. Combinaison selon l'une quelconque des revendications 4 à 7, dans laquelle la paroi de cavité (45) présente une ouverture d'entrée (46.1) pour le premier fluide et une ouverture d'entrée (46.2) pour le deuxième fluide et la partie stationnaire (11) de la tête d'usinage (10) présente un dispositif d'alimentation (80.1) pour le premier fluide et un dispositif d'alimentation (80.2) pour le deuxième fluide, et dans laquelle les ouvertures d'entrée (46.1, 46.2) pour le premier et le deuxième fluide sont disposées de telle sorte que l'ouverture d'entrée (46.1) pour le premier fluide est raccordée au dispositif d'alimentation (80.1) pour le premier fluide et l'ouverture d'entrée (46.2) pour le deuxième fluide est raccordée au dispositif d'alimentation (80.2) pour le deuxième fluide lorsque la structure de support (30) est amenée dans la position opérationnelle stationnaire.

16. Combinaison selon l'une quelconque des revendications 8 à 10, dans laquelle la paroi de cavité (45) présente une ouverture d'entrée (62) pour le gaz de process et la partie stationnaire (11) de la tête d'usinage (10) comprend un dispositif d'alimentation (90) pour gaz de process, et dans laquelle cette ouverture d'entrée (62) est disposée de telle sorte qu'elle est raccordée au dispositif d'alimentation (90) pour le gaz de process lorsque la structure de support (30) est amenée dans la position opérationnelle stationnaire.

17. Combinaison selon l'une quelconque des revendications 11 à 13, dans laquelle la paroi de cavité (45) présente une ouverture d'entrée (72) pour un gaz pouvant être introduit dans l'espace à gaz (70), et la partie stationnaire (11) de la tête d'usinage comprend un dispositif d'alimentation (95) pour ce gaz, et dans laquelle cette ouverture d'entrée (72) est disposée de telle sorte qu'elle est raccordée au dispositif d'alimentation (95) pour ce gaz lorsque la structure de support (30) est amenée dans la position opérationnelle stationnaire.

18. Combinaison selon l'une quelconque des revendications 2 à 17, dans laquelle la tête d'usinage (10) comprend une partie stationnaire (11), et la structure de support (30) du module (20) peut être amenée dans une position opérationnelle stationnaire par rapport à la partie stationnaire (11) de la tête d'usinage (10).

19. Machine d'usinage au laser (1) avec une combinaison d'une tête d'usinage modulaire (10) et un module échangeable (20) selon l'une quelconque des revendications 2 à 18.
